# EUROPEAN PATENT SPECIFICATION

(11) **EP 2 257 422 B1**
(45) Date of publication and mention of the grant of the patent: **10.07.2013**
(21) Application number: 09720965.4
(22) Date of filing: 11.03.2009
(51) Int. Cl.: B29C 73/16, B29C 73/22, C08L 51/08, C08L 51/00, B01J 13/18

(54) **A COMPOSITE MATERIAL WHICH IS SELF-REPAIRING EVEN AT LOW TEMPERATURE**
KOMPOSITMATERIELL MIT NIEDRIGER TEMPERATUR SELBST-REPARATUR EIGENSCHAFTEN
MATÉRIAU COMPOSITE QUI EST AUTO-RÉPARABLE MÊME À BASSE TEMPÉRATURE

(30) Priority: 13.03.2008 IT TO20080194
(43) Date of publication of application: 08.12.2010
(73) Proprietor: Alenia Aermacchi S.p.A., 21040 Venegono Superiore (VA) (IT)
(72) Inventor: GUADAGNO, Liberata, I-84084 Fisciano (Salerno) (IT); LONGO, Pasquale, I-84047 Capaccio (Salerno) (IT); RAIMONDO, Marialuigia, I-84025 Eboli (Salerno) (IT); MARICONDA, Annaluisa, I-84081 Baronissi (Salerno) (IT); NADDEO, Carlo, I- 84098 Pontecagnano Faiano (Salerno) (IT); SORRENTINO, Andrea, I-80036 Palma Campania (Napoli) (IT); VITTORIA, Vittoria, I- 80128 Napoli (IT); IANNUZZO, Generoso, I-83100 Avellino (IT); RUSSO, Salvatore, I-80010 Quarto (Napoli) (IT); CALVI, Erika, I-83026 Montoro Superiore (Avellino) (IT)
(74) Representative: Gerbino, Angelo
(86) International application number: PCT/IB2009/051005
(87) International publication number: WO 2009/113025

(56) References cited:
- EP-A- 1 942 125
- WO-A-99/55753
- JP-A- 3 106 961
- US-A- 5 324 616
- US-A1- 2005 096 454
- US-A1- 2006 211 905
- US-A1- 2009 036 568
- US-B2- 6 518 330

## Description

The present invention relates to the field of composite materials comprising thermosetting polymer matrices.

Thermosetting polymers with structural properties are typically used in applications in which they are subjected to heavy mechanical stresses which may cause damage due to the formation of micro-cracks even in the innermost parts of the structure where diagnosis of the damage and any repair operations are extremely difficult.

To overcome these difficulties, self-repairing composite materials comprising thermosetting matrices have already been proposed; that is to say, these materials can autonomously bring about a repair process which re-establishes the integrity of the matrix before the micro-cracks can propagate seriously compromising the integrity of the structure.

Composite materials of this type are described in US-6 518 330. In particular, powders of catalysts of ring-opening metathesis reactions, and microcapsules containing a reactive monomer which can polymerize as a result of a ring-opening metathesis reaction and subsequently cross-link, are dispersed in the matrices of these materials. When a crack which is forming in such material reaches a microcapsule, it therefore breaks the microcapsule, releasing the monomer. When the monomer comes into contact with the catalyst it polymerizes and then cross-links so as to block the crack and re-establish the structural continuity of the matrix.

However, the monomers described specifically in US-6 518 330 have not been completely satisfactory, particularly because of the polymerization kinetics which are rather slow at ambient temperature and substantially zero at low temperatures, as well as of the low yield of cross-linked repair product for a given initial quantity of monomer reagent. US5324616 discloses a process for preparing encapsulated toner compositions comprising metathesis polymerisation of cyclic olefins such as ethyl norbornene.

JP 3106961 discloses the production of polymer blends by dissolving polystyrene resin in a metathesis polymerisable monomer such as ethylidene-norbornene.

The object of the present invention is to provide a self-repairing composite material which has improved properties, particularly with regard to the kinetics of the polymerization reaction and the yield of cross-linked repair product.

According to the invention, this object is achieved with the use of 5-ethylidene-2-norbornene (ENB) as the reactive monomer in a composite material of the type mentioned above.

When a self-repair process is triggered in the composite material of the invention, it has been found that the metathesis reaction proceeds very quickly, in particular both with first generation and second generation Grubbs catalysts and with Hoveyda-Grubbs catalysts.

Examples of catalysts usable in the material of the invention are, amongst the first-generation Grubbs catalysts, ruthenium, dichloro(phenylmethylene)bis(tricyclohexylphosphine) (I), amongst the second-generation Grubbs catalysts, ruthenium,[1,3-bis-(2,4,6-trimethylphenyl)-2-imidazolidinylidene]dichloro (phenylmethylene)(tricyclohexylphosphine) (II) and, amongst the Hoveyda-Crubbs catalysts, ruthenium,dichloro[[2-(1-methylethoxy)phenyl]methylene](tricyclohexylphosphine) (III), and ruthenium,[1,3-bis (2,4,6-trimethylphenyl)-2-imidazolidinylidene]dichloro[[2-(1-methylethoxy)phenyl]methylene] (IV), the structural formulae of which are given below, marked by the respective Roman numerals indicated above.

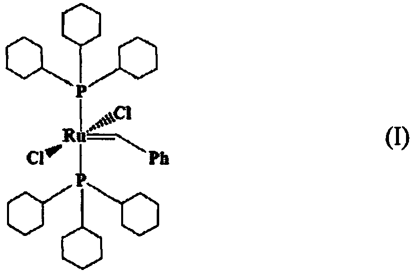

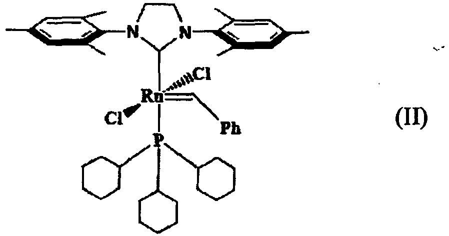

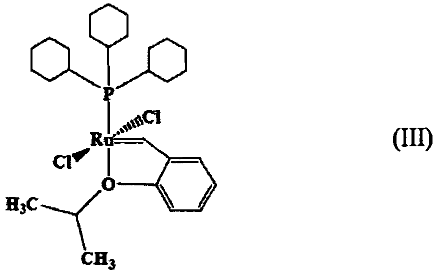

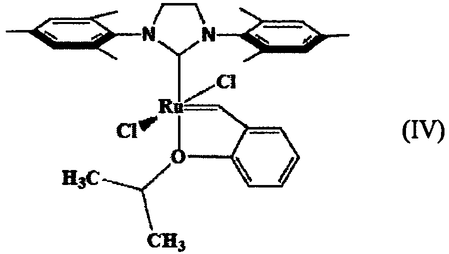

In the material of the invention, the metathesis reaction takes place even at very low temperatures (down to -40°C) at which Grubbs catalysts are inactive with a conventional monomer such as dicyclopentadiene (DCPD).

Furthermore, the possibility of using Hoveyda-Grubbs catalysts is of particular interest since they have even greater activity than Grubbs catalysts at low temperature and are more stable than the latter at high temperature.

Moreover, in the material of the invention, the yield of the metathesis reaction is considerably higher than that recorded in the known formulations described, for example, in US-6 518 330.

The material of the invention has the further advantage that the second-generation Grubbs catalyst within it undergoes no thermolytic decomposition up to 150°C. This is particularly advantageous since the possibility of carrying out the setting process at higher temperatures gives the material improved chemical, physical and mechanical characteristics.

In general, ENB has the following characteristics:
- a wide range of stability of the liquid phase,
- good compatibility with the materials used for the walls of the microcapsules so that it does not compromise them during the period of thermal and chemical stability;
- a good release capacity by virtue of which it can flow into the empty space of the crack under the influence of capillary effects and come into contact with the catalyst at the interface thereof;
- a viscosity which permits wetting of the thermosetting polymer in the crack, and
- the capacity to be converted into a cross-linked polymer without substantial change in volume.

The shells of the microcapsules containing the ENB are produced by known techniques and with known materials, for example, urea-formaldehyde. Typically, the microcapsules can be synthesized with a diameter which may vary from a few µm up to 250 µm. A desired dimension range can be selected by suitable variation of the process parameters during the synthesis stage or with the use of molecular sieves. For example, with the use of an *in situ* polymerization process with urea-formaldehyde and by setting the process parameters as described in White S R, Sottos N R, Geubelle P H, Moore J S, Kessler M R, Sriram, S R, Brown E N, Viswanathan S, Autonomic healing of polymer composites, Nature 2001; 409:794-7 or in Brown E N, Kessler M R, Sottos N R, and White S R, Journal of Microencapsulation, Vol. 20 No. 6, 719-730 2003, the results given in Table I below are obtained. In particular, the table gives the percentages by weight of the particles that can be classified in various dimension ranges.

**Table I**

| Dimension ranges (µm) | Percentage by weight (%) |
|---|---|
| ≥250 | 0,92 |
| 250 - 150 | 4,56 |
| 150 - 38 | 78,43 |
| ≤ 38 | 16,10 |

The material of the present invention can be formulated with low values of the catalyst/monomer ratio whilst keeping the yield of the metathesis reaction unchanged. In contrast, with the known monomer DCPD, if the catalyst/monomer ratio is reduced, for example, from 1.0 x 10⁻³ to 2.0 x 10⁻⁴, a drastic reduction in the yield of the metathesis reaction is recorded.

According to the present invention, the molar ratio between catalyst and ENB may advantageously be between 1:100 and 1:10000.

The thermosetting polymer used for the matrix may be selected without particular limitations, for example, from phenolic, amide, epoxy, polyurethane, unsaturated polyester, and alkyd resins, etc. Amongst the epoxy resins that can be used, phenol-glycidyl ethers (DGEBA, LER, SER), glycidyl amines (TGMDA, TGPAP), as well as cycloaliphatic and multifunctional resins (EPN, ECN, BPAN) may be mentioned, for example.

In advantageous embodiments of the invention, carbon nanotubes are also dispersed in the polymer matrix, for example, in a quantity of between 0.1 and 5% by weight of the thermosetting polymer matrix. The material is thus electrically conductive and, at the same time, has good mechanical properties with a high glass transition temperature and high elastic modulus values within a wide temperature range.

Examples of formulations of self-repairing composite materials formed both in accordance with the invention and in accordance with the prior art will now be given.

Table II below gives the composition data for various material examples as well as the temperatures and durations of the respective self-repair processes and the conversion percentages of the monomers upon completion thereof. In the table, the term "Grubbs 1" indicates ruthenium,dichloro(phenylmethylene)bis(tricyclohexylphosphine), the term "Grubbs 2" indicates ruthenium,[1,3-bis-(2,4,6-trimethylphenyl)-2-imidazolidinylidene]dichloro (phenylmethylene)(tricyclohexylphosphine), the term "Hoveyda-Grubbs 1" indicates ruthenium,dichloro[[2-(1-methylethoxy)phenyl]methylene](tricyclohexylphosphine), the term "Hoveyda-Grubbs 2" indicates ruthenium,[1,3-bis (2,4,6-trimethylphenyl)-2-imidazolidinylidene]dichloro[[2-(1-methylethoxy)phenyl]methylene], and the acronyms DCPD and ENB have the meanings given above. The compositions containing DCPD thus act as comparisons whereas those containing ENB are compositions of the invention.

**Table II**

| *CATALYST* | *Molar RATIO between catalyst and reactive monomer* | *TEMPERATURE (°C)* | *TIME (minutes =m)*, *(hours =h)* | *CONVERSION (%)* |
|---|---|---|---|---|
| GRUBBS 1 | 1:1000 DCPD | 25 | 15 *m* | 34 |
| GRUBBS 1 | 1:1000 DCPD | 10 | 15 *m* | 0 |
| GRUBBS 1 | 1:1000 DCPD | 10 | 30 *m* | 0 |
| GRUBBS 1 | 1:1000 DCPD | 0 | 5 *m* | 0 |
| GRUBBS 1 | 1:2000 DCPD | 25 | 20 *m* | 3,7 |
| GRUBBS 1 | 1:5000 DCPD | 25 | 120 *m* | 3,8 |
| | | | | |
| GRUBBS 1 | 1:1000 ENB | 25 | 0,5 *m* | 100 |
| GRUBBS 1 | 1:1000 ENB | 0 | 13 *m* | 100 |
| GRUBBS 1 | 1:1000 ENB | -10 | 60 *m* | 16,8 |
| GRUBBS 1 | 1:1000 ENB | -20 | 24 *h* | 79 |
| GRUBBS 1 | 1:1000 ENB | -30 | *24 h* | 74 |
| GRUBBS 1 | 1:1000 ENB | -40 | *24 h* | 0 |
| GRUBBS 1 | 1:2000 ENB | 25 | 0,5 *m* | 100 |
| GRUBBS 1 | 1:5000 ENB | 25 | 0,5 *m* | 100 |
| | | | | |
| GRUBBS 2 | 1:1000 DCPD | 25 | 15 *m* | 11 |
| GRUBBS 2 | 1:1000 ENB | 25 | 1 *m* | 99 |
| GRUBBS 2 | 1:1000 ENB | 0 | 50 *m* | 100 |
| HOVEYDA-GRUBBS 1 | 1:1000 ENB | 25 | 0,5 *m* | 100 |
| HOVEYDA-GRUBBS 1 | 1:1000 ENB | -40 | 24 *h* | 100 |
| HOVEYDA-GRUBBS 2 | 1:1000 ENB | 25 | 8 *m* | 100 |
| HOVEYDA-GRUBBS 2 | 1:1000 ENB | -40 | 24 *h* | 100 |

As can readily be seen from the data given above for the reactivity of the compositions with Grubbs 1 catalyst at ambient temperature, those of the invention complete the polymerization reaction with a 100% yield within a period of the order of seconds whereas the known compositions have a yield of only 34% after a period of 15 minutes.

With regard to the reactivity of the compositions with Grubbs 1 catalyst at 0°C, those of the invention complete the polymerization reaction within a period of the order of 13 minutes whereas the known compositions are substantially inactive. The compositions of the invention are active even down to temperatures of -30°C.

Similar results are obtained with the compositions with Grubbs 2 catalyst. In particular, those of the invention are even active at 0°C, unlike known compositions. With the Hoveyda-Grubbs 1 and Hoveyda-Grubbs 2 catalysts the metathesis reaction is active down to temperatures of -40°C.

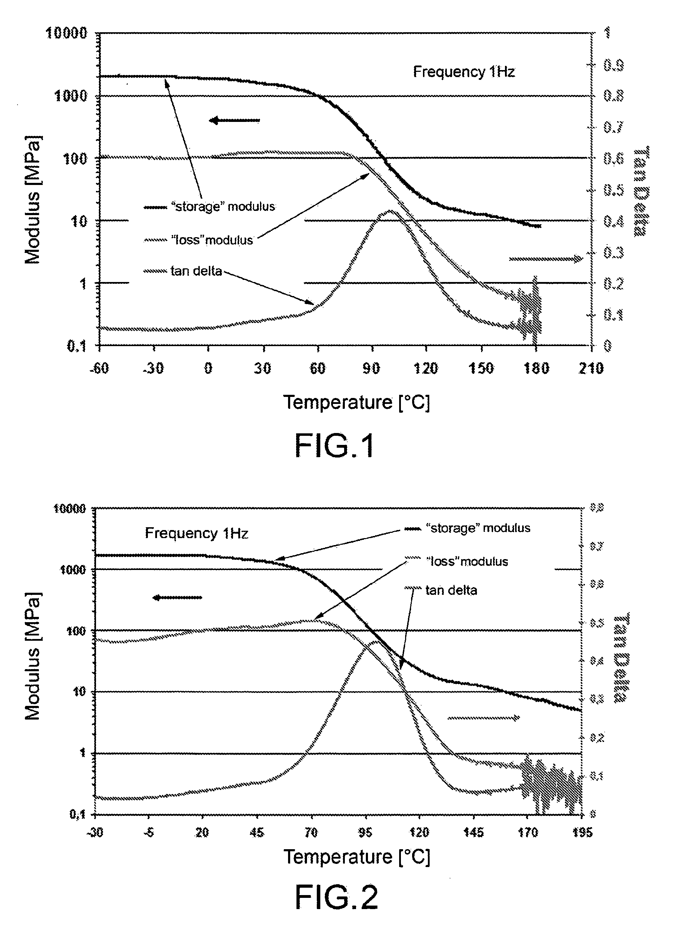

Figure 1 shows the spectrum obtained by mechanical/dynamic testing of a material of the invention which was subjected to a setting process at a temperature of 130°C and had the following composition:

| | |
|---|---|
| epoxy resin: | 63 g |
| flexibilizer: | 37 g |
| hardener (2,4,6-tris[(dimethylamino)methyl] phenol) | 10 g |
| Grubbs 1 catalyst: | 5 g |
| microcapsules containing ENB: | 20 g |
| carbon nanotubes: | 2 g |

As shown by Figure 1, the "storage" modulus values are very high, being greater than 1000 MPa up to 60-70°C. As far as the Tg is concerned, it is between 100 and 120°C.

With regard to the conductivity properties of the formulation the mechanical/dynamic spectrum of which is given in Figure 1, the percolation threshold is reached with a nanotube percentage of 0.1 %, that is, much lower than that used in the test.

The self-repairing capability at low temperatures and the conductivity properties also remain effective when specific diluents suitable for replacing the flexibilizer and optimizing the viscosity of the material at the processing stage are used in the formulation. For example, with a highly viscous epoxy resin matrix such as 4,4-methylene bis(N,N-diglycidylaniline), up to 25% by weight of 1,4-butandiol diglycidyl ether can be used.

Figure 2 gives the same type of spectrum for a material similar to that which was tested to give the mechanical/dynamic spectrum of Figure 1 except that it is free of carbon nanotubes. In this case again, the "storage" modulus values are very high.

The principle of the invention remaining the same, the examples details of implementation may be varied within the claimed subject-mutter scope.

## Claims

1. A composite material comprising a thermosetting polymer matrix in which a ring-opening metathesis reaction catalyst, and microcapsules containing a reactive monomer which can polymerize as a result of a ring-opening metathesis reaction and subsequently cross-link, are dispersed, the reactive monomer being 5-ethylidene-2-norbomene.

2. A material according to Claim 1 in which the catalyst is selected from the group constituted by Grubbs and Hoveyda-Grubbs catalysts.

3. A material according to Claim 2 in which the catalyst is selected from the group consisting of ruthenium,dichloro(phenylmethylene)bis(tricyclohexylphosphine), ruthenium,[1,3-bis-(2,4,6-trimethylphenyl)-2-imidazolidinylidene]dichloro (phenylmethylene)(tricyclohexylphosphine), ruthenium,dichloro[[2-(1-methylethoxy)phenyl]methylene](tricyclohexylphosphine), and ruthenium,[1,3-bis (2,4,6-trimethylphenyl)-2-imidazolidinylidene]dichloro[[2-(1-methylethoxy)phenyl]methylene], and mixtures thereof.

4. A material according to any one of the preceding claims in which the thermosetting polymer is selected from the group consisting of phenolic, amide, epoxy, polyurethane, unsaturated polyester and alkyd resins.

5. A material according to any one of the preceding claims in which the molar ratio between catalyst and reactive monomer is between 1:100 and 1:10000.

6. A material according to any one of the preceding claims in which carbon nanotubes are also dispersed in the polymer matrix.

7. A material according to Claim 6 in which the nanotubes are present in a quantity of between 0.1 and 5% by weight of the thermosetting polymer matrix.

## Patentansprüche

1. Verbundmaterial, umfassend eine wärmehärtbare Polymermatrix, in welcher ein Ringöffnungsmetathesereaktionskatalysator und Mikrokapseln dispergiert sind, welche ein reaktives Monomer enthalten, das als Ergebnis einer Ringöffnungsmetathesereaktion und nachfolgender Vernetzung polymerisieren kann, wobei das reaktive Monomer 5-Ethyliden-2-Norbonen ist.

2. Material nach Anspruch 1, in welchem der Katalysator ausgewählt ist aus der Gruppe, bestehend aus Grubbs- und Hoveyda-Grubbs-Katalysatoren.

3. Material nach Anspruch 2, in welchem der Katalysator ausgewählt ist aus der Gruppe, bestehend aus
Ruthenium, Dichlor(phenylmethylene)bis(tricyclahexylphosphan),
Ruthenium,[1,3-Bis-(2,4,6-trimethylphenyl)-2-imidazolindinyliden]dichlor-(phenylmethylen)(tricyclohexylphosphan),
Ruthenium, Dichlor[[2-(1-methylethoxy)phenyl]methylen](tricyclohexylphosphan) und
Ruthenium,[1,3-Bis-(2,4,6-trimethylphenyl)-2-imidazolidinyliden]dichlor[[2-(1-methylethoxy)phenyl]methylen], und Gemischen davon.

4. Material nach einem der vorhergehenden Ansprüche, in welchem das wärmehärtbare Polymer aus der Gruppe ausgewählt ist, bestehend aus Phenol- , Amid-, Epoxy-, Polyurethan-, ungesättigten Polyester- und Alkydharzen.

5. Material nach einem der vorhergehenden Ansprüche, in welchem das Molverhältnis zwischen Katalysator und reaktiven Monomer zwischen 1:100 und 1:10000 liegt.

6. Material nach einem der vorhergehenden Ansprüche, in welchem auch Kohlenstoffnanoröhrchen in der Polymermatrix dispergiert sind.

7. Material nach Anspruch 6, in welchem die Nanoröhrchen in einer Menge zwischen 0,1 und 5 Gew.-% der wärmehärtbaren Polymermatrix vorhanden sind.

## Revendications

1. Matériau composite comprenant une matrice de polymère thermodurcissable dans laquelle sont dispersés un catalyseur de réaction de métathèse avec ouverture de cycle et des microcapsules contenant un monomère réactif qui peut polymériser, en résultat d'une réaction de métathèse avec ouverture de cycle, et ensuite réticuler, lequel monomère réactif est du 5-éthylidène-norborn-2-ène.

2. Matériau conforme à la revendication 1, pour lequel le catalyseur est choisi dans l'ensemble formé par les catalyseurs de Grubbs et les catalyseurs de Hoveyda-Grubbs.

3. Matériau conforme à la revendication 2, pour lequel le catalyseur est choisi dans l'ensemble formé par les suivants :
- dichloro(phényl-méthylène)bis(tricyclohexyl-phosphine)ruthénium,
- [1,3-bis(2,4,6-triméthyl-phényl)-imidazolidin-2-ylidène]dichloro-(phényl-méthylène)(tricyclohexyl-phosphine)ruthénium,
- dichloro{[2-(1-méthyl-éthoxy)phényl]méthylène}(tricyclohexyl-phosphine)ruthénium,
- [1,3-bis(2,4,6-triméthyl-phényl)-imidazolidin-2-ylidène]dichloro-{[2-(1-méthyl-éthoxy)phényl]méthylène}ruthénium,
et leurs mélanges.

4. Matériau conforme à l'une des revendications précédentes, pour lequel le polymère thermodurcissable est choisi dans l'ensemble formé par les résines phénoliques, les résines polyamides, les résines époxy, les polyuréthanes, les polyesters insaturés et les résines alkydes.

5. Matériau conforme à l'une des revendications précédentes, dans lequel le rapport molaire entre catalyseur et monomère réactif vaut entre 1/100 et 1/10000.

6. Matériau conforme à l'une des revendications précédentes, dans lequel des nanotubes de carbone sont également dispersés dans la matrice de polymère.

7. Matériau conforme à la revendication 6, dans lequel les nanotubes se trouvent présents en une quantité représentant de 0,1 à 5 % du poids de la matrice de polymère thermodurcissable.
